# EUROPÄISCHE PATENTANMELDUNG

(11) **EP 0 977 144 A1**
(43) Veröffentlichungstag der Anmeldung: **02.02.2000**
(21) Anmeldenummer: 98114200.3
(22) Anmeldetag: 29.07.1998
(51) Int. Cl.: G06K 19/07

(54) **Datenträger mit einer blockierbaren Taktsignalquelle und Verfahren zum Erzeugen eines Taktsignals in einem Datenträger**

(71) Anmelder: SIEMENS AKTIENGESELLSCHAFT, 80333 München (DE)
(72) Erfinder: Sedlak, Holger, 85658 Egmating (DE); Reiner, Robert, 85579 Neubiberg (DE)

(57) **Zusammenfassung**

Datenträger, insbesondere Chipkarte, mit zumindest einer Sende/Empfangsantenne (SP) sowie einer dieser nachgeschalteten Gleichrichterschaltung (GR) zum Bereitstellen einer Versorgungsspannung (VDD, VSS) für zumindest eine getaktete Schaltungseinheit (Si), wobei eine blockierbare Taktsignalquelle (TSQ), deren Blockiereingang mit dem Ausgang einer die Versorgungsspannung (VDD) mit einer Referenzspannung (Vref) vergleichenden Vergleicherschaltung (COM) verbunden ist, so daß eine Ausgabe von Schaltflanken durch die Taktsignalquelle (TSQ) bei Unterschreiten der Referenzspannung (Vref) durch die Versorgungsspannung (VDD) blockiert ist.

## Beschreibung

Die Erfindung betrifft einen Datenträger, insbesondere eine Chipkarte, mit zumindest einer Sende/Empfangsantenne sowie einer dieser nachgeschalteten Gleichrichterschaltung zum Bereitstellen einer Versorgungsspannung für zumindest eine getaktete Schaltungseinheit.

Sie betrifft auch ein Verfahren zum Erzeugen eines Taktsignals in einem Datenträger, insbesondere einer Chipkarte, dessen Energieversorgung über ein Datenträger-externes elektromagnetisches Wechselfeld erfolgt.

Ein solcher Datenträger ist aus der WO 97/08651 bekannt. Bei diesem bekannten Datenträger handelt es sich um eine kombinierte Chipkarte, deren interne elektronische Schaltungen sowohl über ein Kontaktfeld als auch über eine integrierte Spule betrieben werden können. Im Kontaktlosbetrieb über die Antennenspule wird die zum Betreiben der internen Schaltungen nötige Energie durch das von der Spule empfangene elektromagnetische Feld geliefert. Die zur Verfügung stehende Energie schwankt dabei sehr stark, da sie wesentlich vom Abstand des Datenträgers beziehungsweise der Chipkarte von einer die Energie liefernden Schreib/Lesestation abhängt.

Dies stellt ein Problem dar, da zu jeder Zeit für eine gewünschte Funktion des Datenträgers die nötige Energie zur Verfügung stehen muß. Gut entwickelte Schaltungen werden abgeschaltet, bevor die Energieversorgung sich soweit verschlechtert, daß Fehlfunktionen auftreten können.

Die Schaltungen eines kontaktlosen Datenträgers werden üblicherweise so entworfen, daß sie bei einer geforderten maximalen Reichweite mit der angebotenen Leistung auskommen. Bei geringerem Abstand des Datenträgers beziehungsweise der Chipkarte zur Schreib/Lesestation steht dann allerdings eine Überschußleistung zur Verfügung, die bei dem bekannten Datenträger von einem Parallelspannungsregler aufgenommen wird und damit nutzlos verloren geht.

Die Aufgabe vorliegender Erfindung ist daher, einen gattungsgemäßen Datenträger und ein gattungsgemäßes Verfahren so weiterzubilden, daß der Datenträger möglichst optimal an das aktuelle Leistungsangebot angepaßt ist.

Die Aufgabe wird dadurch gelöst, daß ein gattungsgemäßer Datenträger mit einer blockierbaren Taktsignalquelle versehen ist, deren Blockiereingang mit dem Ausgang einer die Versorgungsspannung mit einer Referenzspannung vergleichenden Vergleicherschaltung verbunden ist, so daß eine Ausgabe von Schaltflanken durch die Taktsignalquelle bei Unterschreiten der Referenzspannung durch die Versorgungsspannung blockiert ist.

Blockierbar heißt hier, daß eine weitere Ausgabe von Schaltflanken unterbindbar ist, der Ausgang der Taktsignalquelle also auf dem zum Zeitpunkt des Blockierens herrschenden Pegel bleibt. Es kann hierbei bereits der das Taktsignal erzeugende Oszillator blockierbar ausgebildet sein, es ist aber auch möglich, einem Oszillator einen Teiler nachzuschalten und diesen blockierbar auszubilden. Es ist außerdem möglich, am Ausgang der Taktsignalquelle eine Verriegelungsvorrichtung wie beispielsweise ein D-Flip-Flop vorzusehen.

Die Aufgabe wird auch durch ein gattungsgemäßes Verfahren gelöst, bei dem bei Unterschreiten einer Referenzspannung der aus dem elektromagnetischen Feld gewonnenen Versorgungsspannung der zu diesem Zeitpunkt vorliegenden Zustand des Taktsignals konstant bleibt und eine Schaltflanke und nachfolgende weitere Schaltflanken des Taktsignals erst bei Überschreiten der Referenzspannung durch die Versorgungsspannung erzeugt werden.

Durch die Erfindung wird also erreicht, daß nur dann Energieverbrauch-auslösende Taktsignal-Schaltflanken erzeugt werden, wenn die Versorgungsspannung des Datenträgers über einer Referenzspannung liegt. Diese Referenzspannung sollte vorteilhafterweise so gelegt werden, daß ihr Abstand zur minimal erforderlichen Versorgungsspannung dem Absinken der Versorgungsspannung bei einem durch eine Schaltflanke ausgelösten maximalen Energieverbrauch entspricht. Es ist von Vorteil, die Taktfrequenz auf den maximal möglichen Wert einzustellen, um zu einer hohen Verarbeitungsgeschwindigkeit der Datenträgerschaltungen zu kommen, wenn die Versorgungsspannung oberhalb der Referenzspannung bleibt.

Die Referenzspannung wird üblicherweise aus der Versorgungsspannung gewonnen und ist daher meistens kleiner als diese. In diesem Fall wird nicht die Versorgungsspannung selbst mit der Referenzspannung verglichen sondern ein davon beispielsweise mittels eines Spannungsteilers abgeleiteter Wert. Eine andere Möglichkeit wäre die Erzeugung der Referenzspannung mittels einer Ladungspumpe, so daß die Referenzspannung auch größer sein könnte als die Versorgungsspannung und dann direkt mit der Versorgungsspannung verglichen werden könnte. "Vergleichen der Versorgungsspannung mit einer Referenzspannung" bedeutet also auch, daß eine der Versorgungsspannung proportionale Spannung mit der Referenzspannung verglichen wird.

Um zu einer möglichst hohen Verarbeitungsgeschwindigkeit zu kommen, ist es außerdem von Vorteil, wenn unmittelbar nach Überschreiten der Referenzspannung durch die Versorgungsspannung eine Schaltflanke des Taktsignals ausgelöst wird.

In manchen Fällen sind in einem kontaktlosen Datenträger jedoch Schaltungsteile vorhanden, die synchron mit einer die nötige Energie und Daten liefernden Schreib/Lesestation arbeiten müssen, beispielsweise das I/O-Interface wie etwa ein UART. Hier ist es von Vorteil, wenn eine Taktsignal-Schaltflanke nicht unmittelbar nach dem Überschreiten der Referenzspannung durch die Versorgungsspannung ausgelöst wird, sondern erst mit der nächsten relevanten Flanke des beispielsweise aus dem hochfrequenten, von der Schreib/Lesestation gelieferten Trägersignal gewonnenen Taktsignals.

Die Erfindung wird nachfolgende anhand von Ausführungsbeispielen mit Hilfe von Figuren näher erläutert. Dabei zeigen:
- Figur 1: ein prinzipielles Blockschaltbild eines erfindungsgemäßen Datenträgers,
- Figur 2: ein detaillierteres Blockschaltbild einer blockierbaren Taktsignalquelle,
- Figur 3: ein dazugehörendes Signaldiagramm,
- Figur 4: ein detaillierteres Blockschaltbild einer Taktsignalquelle mit zu einem externen Taktsignal synchronen Taktsignal, und
- Figur 5: ein dazugehörendes Signaldiagramm.

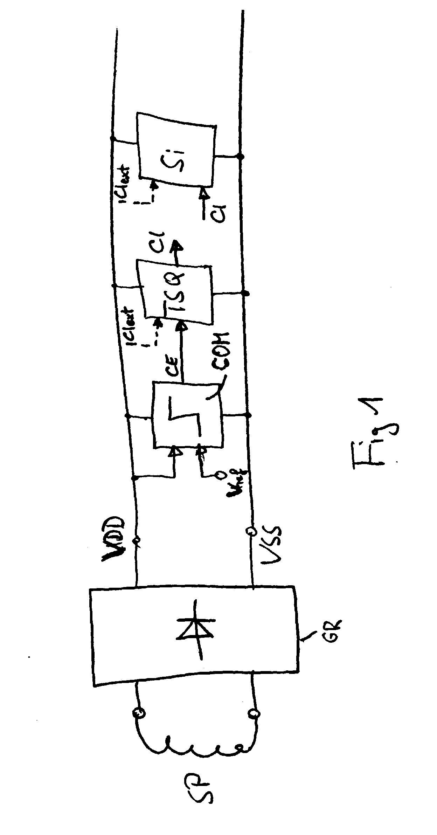

Bei der Prinzipdarstellung eines erfindungsgemäßen Datenträgers gemäß Figur 1 ist eine zum Empfangen und Senden eines Trägersignals geeignete Antennenspule SP mit den Eingängen einer Gleichrichterschaltung GR verbunden. Die Gleichrichterschaltung GR stellt an ihren Ausgängen Versorgungsspannungen VDD, VSS für Schaltungseinheit Si, i=1...n zur Verfügung. Die Schaltungseinheiten Si können beispielsweise ein Mikroprozessor, Coprozessoren oder sonstige logische Schaltungen und/oder Speicher sein.

Da die meisten dieser Schaltungen in irgendeiner Weise zusammenarbeiten, benötigen sie ein Taktsignal, damit ein synchroner Ablauf der einzelnen Vorgänge gewährleistet ist. Bei den derzeit bekannten kontaktlosen Datenträgern wird dieses Taktsignal aus dem von einer Schreib/Lesestation gelieferten hochfrequenten Trägersignal, das von der Spule SP empfangen wird, gewonnen. Dieses Taktsignal kann dann direkt oder nach geeigneter Teilung den einzelnen Schaltungseinheiten Si zugeführt werden. Durch einen strichlierten Pfeil in Figur 1 ist angedeutet, daß bestimmten Schaltungseinheiten, wie beispielsweise einem UART dieses von außen abgeleitete Taktsignal Clext zugeführt wird, um synchron mit der Schreib/Lesestation arbeiten zu können.

Die Leistungsaufnahme der Schaltungseinheiten Si hängt jedoch von der Frequenz des Taktsignals ab. Aus diesem Grund wird die Taktsignalfrequenz beispielsweise durch entsprechende Teiler meist so niedrig eingestellt, daß die Schaltungen auch bei größerem Abstand zur Schreib/Lesestation und damit bei geringer Höhe der Versorgungsleistung noch einwandfrei arbeiten können. Dies hat jedoch den Nachteil, daß bei geringerem Abstand zur Schreib/Lesestation und damit höherer Versorgungsleistung eine Überschußleistung zur Verfügung steht, die beispielsweise durch einen Parallelregler abgeführt werden muß.

In erfindungsgemäßer Weise soll nun stattdessen eine interne Taktsignalquelle TSQ ein Taktsignal Cl mit maximal möglicher Frequenz zur Verfügung stellen. Dieses Taktsignalquelle TSQ kann sowohl einen eigenen Oszillator aufweisen, als auch durch das von außen zugeführt Taktsignal Clext gespeist werden. Wesentlich für die Erfindung ist, daß die Ausgabe von Schaltflanken des Taktsignals Cl blockiert werden und damit prinzipiell die Frequenz des Taktsignals Cl verringert werden kann. Eine Blockierung erfolgt immer dann, wenn die Versorgungsspannunq VDD unter eine Referenzspannung Vref sinkt. Dies wird durch einen Komparator COM detektiert, der ein Auslösesignal CE ausgibt, das dem Blockiereingang der Taktsignalquelle TSQ zugeführt wird.

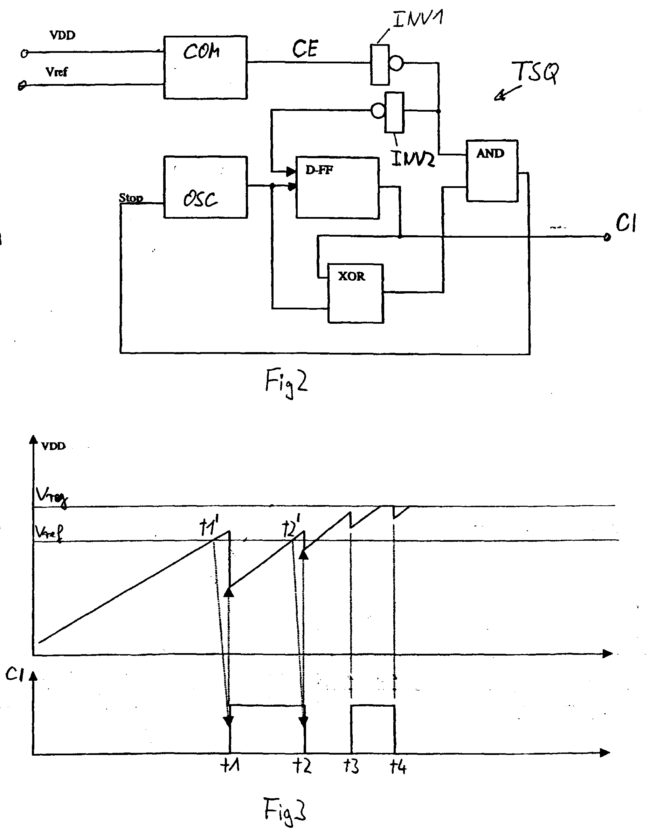

In Figur 2 ist ein detaillierteres Blockschaltbild einer erfindungsgemäßen Taktsignalquelle TSQ zusammen mit dem Komparator COM dargestellt. Der Komparator COM liefert ein Auslösesignal CE, das einen niederen Pegel aufweist, wenn die Versorgungsspannung VDD kleiner als die Referenzspannung Vref wird. Das Auslösesignal CE wird im dargestellten Beispiel der Figur 2 über zwei Inverter INV1, INV2 dem Steuereingang eines D-Flip-Flops zugeführt. Die Taktsignalquelle TSQ weist einen Oszillator OSC mit Stopeingang auf. Dessen Ausgangssignal wird dem Signaleingang des D-Flip-Flops zugeführt, das das Taktsignal Cl an seinem Ausgang bereitstellt. Durch das Auslösesignal CE vom Komparator COM wird eine Ausgabe weiterer Taktsignalflanken durch das D-Flip-Flop verhindert.

Um bei einem Zustandswechsel des Auslösesignals CE bei einem Überschreiten der Versorgungsspannung VDD der Referenzspannung Vref eine sofortige Schaltflanke im Taktsignal Cl zu erzeugen, muß sichergestellt werden, daß am Eingang des D-Flip-Flops, also am Ausgang des Oszillators OSC, der zum Pegel am Ausgang des D-Flip-Flops komplementäre Pegel anliegt, so daß dieser sofort durchgeschaltet wird und damit zu einer Schaltflanke im Taktsignal Cl führt.

Dies erfolgt dadurch, daß sowohl das Ausgangssignal des ersten Inverters INV1 als auch das Ausgangssignal eines EXOR-Gatters XOR den Eingängen eines UND-Gatters AND zugeführt werden, dessen Ausgang mit dem Stopeingang des Oszillators OSC verbunden ist. Das EXOR-Gatter XOR ist mit seinem einen Eingang mit dem Ausgang des D-Flip-Flops und mit seinem anderen Eingang mit dem Eingang des D-Flip-Flops verbunden. Durch dieses Schaltung wird erreicht, daß der Oszillator OSC nach dem Sperren des D-Flip-Flops noch eine halbe Taktperiode weiterläuft, so daß am Eingang des D-Flip-Flops im gesperrten Zustand ein anderer Pegel anliegt als an dessen Ausgang.

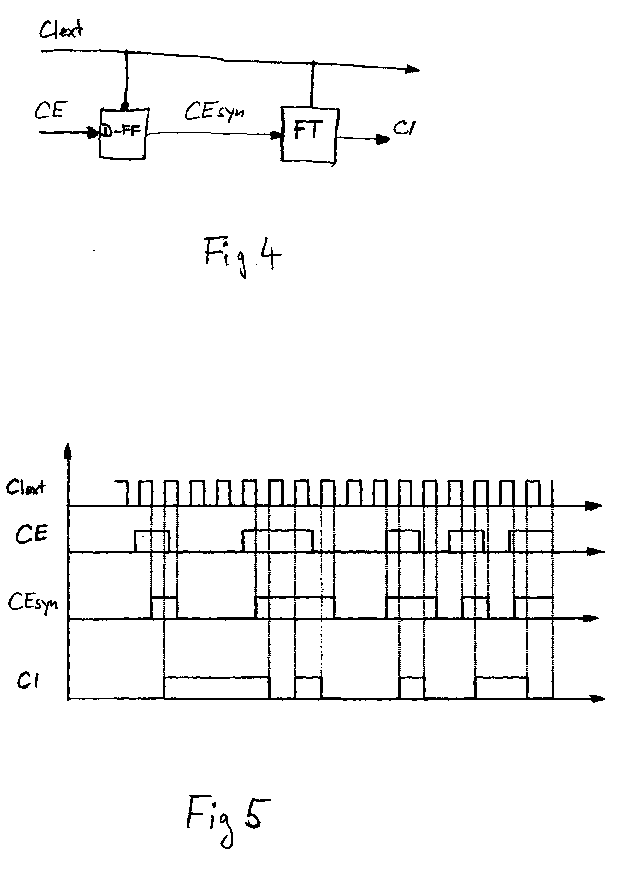

In Figur 3 ist ein möglicher zeitlicher Verlauf sowohl der Versorgungsspannung VDD als auch des Taktsignals Cl dargestellt. Wenn der erfindungsgemäße Datenträger in das elektromagnetische Wechselfeld einer Schreib/Lesestation gebracht wird, steigt die Versorgungsspannung VDD im Inneren des Datenträgers an. Wenn sie zu einem Zeitpunkt t1' die Referenzspannung Vref überschreitet, wird nach einer kleinen schaltungstechnisch bedingten Verzögerungszeit zu einem Zeitpunkt t1 eine Schaltflanke im Taktsignal Cl ausgelöst, die ihrerseits zu einer Datenverarbeitung in den Schaltungseinheiten Si führt, die einen Leistungsverbrauch und damit ein Absinken der Versorgungsspannung VDD zur Folge haben.

Im dargestellten Beispiel sinkt die Versorgungsspannung VDD wieder unter den Wert der Referenzspannung Vref, so daß eine Ausgabe weiterer Taktsignalflanken zunächst unterbunden ist und das Taktsignal Cl auf einem konstanten Pegel bleibt. Erst bei einem neuerlichen Überschreiten der Referenzspannung Vref zu einem Zeitpunkt t2' wird zu einem Zeitpunkt t2 eine weitere Schaltflanke ausgelöst.

Im dargestellten Beispiel steigt die Versorgungsspannung VDD nun weiter an, so daß zu einem Zeitpunkt t3 die nächste Schaltflanke ausgelöst wird. Der Abstand zwischen den Zeitpunkten t2 und t3 ist hier nur noch durch die eingestellte Frequenz des internen Oszillators OSC bestimmt, da die Versorgungsspannung VDD nicht mehr unter die Referenzspannung Vref abgesunken ist.

Die Versorgungsspannung VDD steigt weiter an und stößt an eine obere Spannungsgrenze Vreg, wie sie beispielsweise durch einen Parallelregler eingestellt werden kann. Solange die Versorgungsspannung VDD nicht unter die Referenzspannung Vref absinkt, wird in regelmäßigen Abständen, bestimmt durch die Frequenz des Oszillators OSC eine Schaltflanke im Taktsignal Cl ausgelöst. Wenn sich der Abstand des Datenträgers von der Schreib/Lesestation vergrößert, wird weniger Energie von der Schreib/Lesestation zum Datenträger geliefert, so daß unter Umständen in den Datenträger-internen Schaltungen mehr Energie verbraucht wird als geliefert wird, so daß die Versorgungsspannung VDD wieder unter den Wert der Referenzspannung Vref sinkt und dadurch eine erneute Blockierung des Taktsignals Cl erfolgt.

Durch die erfindungsgemäße Schaltung wird also erfolgreich verhindert, daß Schaltvorgänge ausgelöst werden, ohne daß die für eine saubere Durchführung notwendige Energie zur Verfügung steht.

Wie bereits gesagt wurde, gibt es Anwendungsfälle, bei denen bestimmte Schaltungsteile eines Datenträgers synchron mit der Schreib/Lesestation zusammenarbeiten müssen. Diese Schaltungsteile arbeiten mit einem Taktsignal Clext, wie es aus dem von der Schreib/Lesestation gelieferten Trägersignal gewonnen und bei Bedarf durch Teilung auf eine geeignete Frequenz gebracht wurde.

Es wäre zwar prinzipiell möglich, verschiedene Schaltungsteile, die nicht synchron miteinander arbeiten müssen, mit unterschiedlichen Taktsignalen zu beaufschlagen, in bestimmten Fällen ist es jedoch von Vorteil, wenn alle in einer Gesamtschaltung, insbesondere in einer integrierten Halbleiterschaltung vorkommenden Signale und Abläufe, insbesondere Taktsignale synchron zueinander verlaufen.

Figur 4 zeigt eine Schaltung, mittels der ein zu einem externen Taktsignal Clext synchrones Taktsignal Cl gewonnen werden kann. Hierzu wird das externe Taktsignal Clext negiert dem Schalteingang eines D-Flip-Flops zugeführt, so daß das an dessen Eingang anliegende Auslösesignal CE nur mit einer abfallenden Flanke des externen Taktsignals Clext als synchrones Auslösesignal CEsyn durchgeschaltet wird. Dieses synchrone Auslösesignal CEsyn steuert den Blockiereingang eines Frequenzteilers FT an, an dessen Eingang das externe Taktsignal Clext anliegt. Der Frequenzteiler FT liefert an seinem Ausgang ein synchrones Taktsignal Cl.

Figur 5 zeigt den zeitlichen Ablauf der Signale aus Figur 4. Wie aus Figur 5 zu erkennen ist, wird zunächst aus dem Auslösesignal CE ein synchronisiertes Auslösesignal CEsyn erzeugt, das im dargestellten Beispiel synchron mit der fallenden Flanke des externen Taktsignals Clext ist. Synchron mit der steigenden Flanke des externen Taktsignals Clext werden immer dann Taktsignalflanken im Taktsignal Cl ausgelöst, wenn das sychronisierte Auslösesignal CE einen positiven Pegel aufweist, der im dargestellten Beispiel ein Anzeichen dafür ist, daß die Versorgungsspannung VDD größer als die Referenzspannung Vref ist.

Die Erfindung ist nicht auf die dargestellten Ausführungsbeispiele beschränkt, insbesondere können alle in den Figuren dargestellten Schaltungsteile auf einem einzigen Halbleiterchip integriert sein. Die Erfindung kann besonders vorteilhaft bei kontaktlosen Datenträgern angewandt werden, da dort starke Versorgungsleistungsschwankungen aufgrund des sich ändernden Abstands eines Datenträgers zur Schreib/Lesestation vorkommen. Es ist jedoch in gleicher Weise eine Anwendung in kontaktbehafteten Systemen möglich, bei denen aus anderen Gründen die Versorgungsspannung Schwankungen unterliegt.

## Patentansprüche

1. Datenträger, insbesondere Chipkarte, mit zumindest einer Sende/Empfangsantenne (SP) sowie einer dieser nachgeschalteten Gleichrichterschaltung (GR) zum Bereitstellen einer Versorgungsspannung (VDD, VSS) für zumindest eine getaktete Schaltungseinheit (Si),
**gekennzeichnet durch**,
eine blockierbare Taktsignalquelle (TSQ), deren Blockiereingang mit dem Ausgang einer die Versorgungsspannung (VDD) mit einer Referenzspannung (Vref) vergleichenden Vergleicherschaltung (COM) verbunden ist, so daß eine Ausgabe von Schaltflanken durch die Taktsignalquelle (TSQ) bei Unterschreiten der Referenzspannung (Vref) durch die Versorgungsspannung (VDD) blockiert ist.

2. Datenträger nach Anspruch 1,
**dadurch gekennzeichnet**,
daß die Taktsignalquelle (TSQ) mit einem blockierbaren Oszillator (OSC) gebildet ist.

3. Datenträger nach Anspruch 1,
**dadurch gekennzeichnet**,
daß die Taktsignalquelle (TSQ) mit einem blockierbaren Teiler gebildet ist, dessen Eingang von einem externen Taktsignal (Clext) beaufschlagt ist.

4. Datenträger nach einem der Ansprüche 1 oder 2,
**dadurch gekennzeichnet**,
daß die Taktsignalquelle (TSQ) derart ausgebildet ist, daß bei Überschreiten der Referenzspannung (Vref) durch die Versorgungsspannung (VDD) unmittelbar eine Taktsignalflanke ausgegeben wird.

5. Datenträger nach Anspruch 3,
**dadurch gekennzeichnet**,
daß die Taktsignalquelle (TSQ) derart ausgebildet ist, daß bei Überschreiten der Referenzspannung (Vref) durch die Versorgungsspannung (VDD) eine Taktsignalflanke nur synchron zu einer Flanke des externen Taktsignals (Clext) ausgegeben wird.

6. Verfahren zum Erzeugen eines Taktsignals (Cl) in einem Datenträger, insbesondere einer Chipkarte, dessen Energieversorgung über eine Datenträger-externes elektromagnetisches Wechselfeld erfolgt,
**dadurch gekennzeichnet**,
daß bei Unterschreiten einer Referenzspannung (Vref) der aus dem elektromagnetischen Feld gewonnenen Versorgungsspannung (VDD) der zu diesem Zeitpunkt vorliegende Zustand des Taktsignals (Cl) konstant bleibt und eine Schaltflanke und nachfolgende weitere Schaltflanken des Taktsignals (Cl) erst bei Überschreiten der Referenzspannung (Vref) durch die Versorgungsspannung (VDD) erzeugt werden.

7. Verfahren nach Anspruch 6,
**dadurch gekennzeichnet**,
daß eine Schaltflanke unmittelbar nach dem Überschreiten der Referenzspannung (Vref) durch die Versorgungsspannung (VDD) erzeugt wird.

8. Verfahren nach Anspruch 6,
**dadurch gekennzeichnet**,
daß eine Schaltflanke nach dem Überschreiten der Referenzspannung (Vref) durch die Versorgungsspannung (VDD) nur synchron mit einem weiteren Taktsignal (Clext), das insbesondere aus dem elektromagnetischen Wechselfeld gewonnen wird, erzeugt wird.
